# EUROPEAN PATENT SPECIFICATION

(11) **EP 0 853 849 B1**
(45) Date of publication and mention of the grant of the patent: **03.04.2002**
(21) Application number: 96930939.2
(22) Date of filing: 26.09.1996
(51) Int. Cl.: H04L 12/24

(54) **CO-OPERATIVE NETWORK MANAGER**
ZUSAMMENARBEITENDER NETZVERWALTER
GESTIONNAIRE DE RESEAU COOPERATIF

(30) Priority: 02.10.1995 GB 9520055
(43) Date of publication of application: 22.07.1998
(73) Proprietor: Alcatel Canada Inc., Kanata, Ontario K2K 2E6 (CA)
(72) Inventor: ENSING, Karen, Thamesford, Ontario N0M 2M0 (CA); FOWLER, David, Ottawa, Ontario K1N 5P8 (CA); NEVILLE, Wade, Almonte, Ontario K0A 1A0 (CA)
(74) Representative: Feray, Valérie
(86) International application number: CA9600648
(87) International publication number: WO9715151

(56) References cited:
- IEEE NETWORK OPERATIONS AND MANAGEMENT SYMPOSIUM, 15 - 19 April 1996, KYOTO, XP000671221 NOHARA, TANAKA, ISHII, MIYAGASHI: "An Environment supporting cooperative operation over multiple networks"
- MULTIMEDIA TRANSPORT AND TELESERVICES. INTERNATIONAL COST 237 WORKS PROCEEDINGS, VIENNA, NOV. 13 - 15, 1994, 13 November 1994, HUTCHISON D;DANTHINE A; LEOPOLD H; COULSON G (EDS ), pages 346-355, XP000585312 RIEXINGER D ET AL: "INTEGRATION OF EXISTING APPLICATIONS INTO A CONFERENCE SYSTEM"
- NACHRICHTENTECHNISCHE BERICHTE, no. 9, 1 April 1992, pages 84-93, XP000331866 DERENBACH H: "NSUE, EIN NETZMANAGEMENT-SYSTEM FUER KOMMUNIKATIONSNETZE"
- ACM TRANSACTIONS ON GRAPHIC, 1986, XP002029786 ROBERT SCHEIFLER: "The X Window System"
- IBM PERSON TO PERSON, 1 January 1994, pages 1-16, XP002009067 PHIPPS S: "NO TARDIS REQUIRED PRODUCTIVITY THROUGH CO-OPERATIVE NETWORKING FROM THE DESKTOP"
- ELECTRONIC DESIGN, 10 June 1993, XP000670478 MILT LEONARD: "Software Suite drives Desktop Videoconferencing"

## Description

This invention relates to the management of networks, in particular wide area networks.

Modem wide area networks are managed from operator stations running network management software. A typical network manager is the Newbridge Networks Corporation Mainstreet® 46020 intelligent network station.

The operators who use the 46020 intelligent network station are typically wide ranging in the level of familiarity they have with the product. New operators often need to contact more experienced operators to ask questions about the network being managed and the use of the 46020 network manager. If a less experienced operator is working in an environment physically isolated from the more experienced operator, the ability to communicate essential information is currently limited to voice, fax, and travel.

The article "NSU, eni Netzmanagement System for Kommunikationsnteze" in ANT Nachrichtentechnische Berichte, no. 9, 1 April 1992, pages 84 to 92, describes a network management system with more than one network management station, but discloses no means allowing different managers to co-operate on the network.

The article in International Cost 237 Works Proceedings, 13 -15 November 1994, pages 346 to 355 describes the integration of applications into a conference system to allow conferees, for example, to share WordPerfect documents.

An object of the invention is to alleviate the aforementioned problem.

According to the present invention there is provided a network management system comprising a wide area network, a network manager controlling the operation of said network, and at least two network management stations attached to said network to allow operator intervention in the management thereof, each said management station including a conference engine, and means for directly linking said at least two network management stations to permit real time interaction between said network operators via said conference engines as they manage the network.

The system in accordance with the invention thus allows one operator to initiate a learning session with another operator. This learning session greatly enhances the amount and quality of instruction that can be given remotely since the learning process can take place in a real-world environment. Productivity gains and reduced training course costs result from this system.

Any suitable commercial conference engine may be employed. One suitable example is Communique by InSoft, Inc of Mechanicsburg, Pennsylvania, USA.

In a preferred embodiment, the initiation of the cooperative session is accomplished by the following steps:
- One operator selects a 46020 Intelligent Network Station icon on the local 46020 map display.
- The operator then selects Communications - > Establish Conference from the main menu on the 46020 network manager using the Communique conference engine.
- This action sends a message to conference engine software on the 46020 machine telling it to establish a session from the local station to the remote station selected on the 46020 map.
- The conference engine software on both network stations negotiates until the conference session is established.

The learning session, once established, can allow the users to communicate in four ways:
1) Voice - If both stations are equipped with a microphone and speaker, bidirectional voice communication can take place. This allows the operators to communicate about the actions performed in the other media.
2) Video - If a network station has a video camera, the remote station operator can witness physical actions by the local operator. This allows demonstration of repair techniques and allows the operators to become familiar with each other, thereby enhancing the quality of the learning experience.
3) Whiteboard - A whiteboard application appears on the screens of both machines. This allows either operator to communicate through drawing since drawings on one screen appear on both screens. This teaching technique is effective for illustration of network layouts and other technical drawings. The drawings can be explained as they are made through the voice interface.
4) 46020 window sharing - One operator can share the 46020 windows of the local machine. The 46020 windows are then displayed on both screens. Again, this teaching technique allows demonstration of various 46020 operations and can be simultaneously explained through the voice interface.

The invention will now be described in more detail, by way of example only, with reference to the accompanying drawings, in which:
Figure 1 shows two network managers sharing information; and
Figure 2 shows the order of messaging between the two stations.

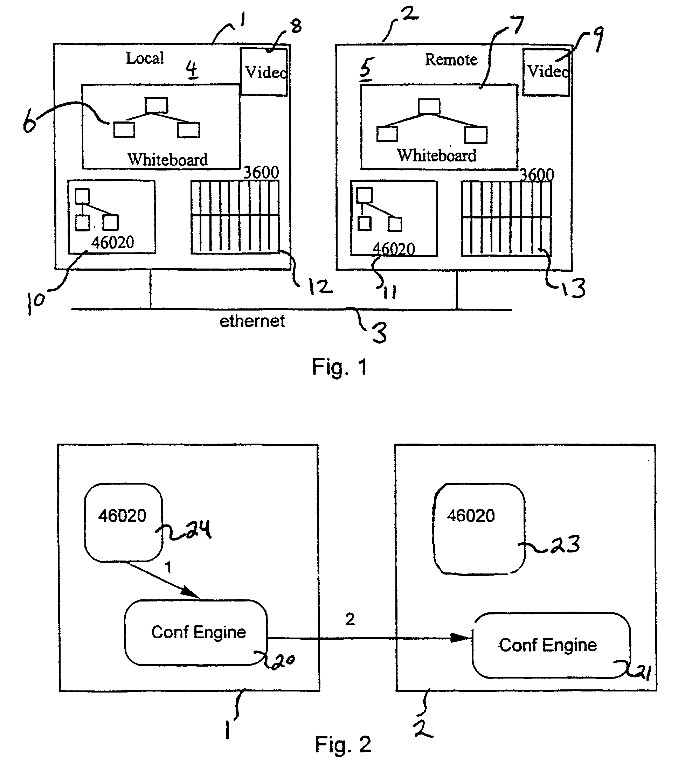

Referring to now Figure 1, two workstations 1, 2, for example Sun™ SPARCstation™, running Newbridge Networks Corporation 46020 network management software, serve as network management stations for a wide area network not shown. Such a network can include multi-vendor products and employ multiple protocols.

The work stations 1, 2 are interconnected over an Ethernet LAN 3, which in turn may be connected to a wide area network managed by the workstations 1,2

When a conference session has been initiated, each workstation 1, 2 has a display screen 4, 5, which in the conference mode has several windows. The workstations are shown in a typical conference session. If the workstations are geographically far apart, the can be connected to separate LANs interconnected through the wide area network, for example using frame relay or the like.

Each workstation may display a whiteboard window 6, 7, which allows either operator to make drawings using a conventional pointing device, such as a mouse.

Video window 8, 9 displays a video image from the other workstation. This can be of the operator him or herself, or of documents or other material.

Network window 10, 11 displays the status of the network in and is a conventional 46020 window, which of course is the same for both operators when the invention is in operation.

Windows 12, 13 show the status of a Newbridge Networks Corporation Mainstreet® 3600 bandwidth manager.

Figure 2 above shows the messaging that takes place when establishing a conference session using IP protocol.

In Figure 2, each workstation 1, 2 includes a 46020 network manager 22, 23 and an Insoft, Inc. conference engine 20, 21. When an operator clicks on an icon to initiate a conference at for example workstation 1, the associated network manager 22 sends a message 24 giving the user name and Unix account of the station it is desired to communicate with to a socket of a TCP/IP stack, which in turn directs the message to the conference engine 20, telling the conference engine which network station it is desired to start a dialogue with over the LAN 3.

The conference engine 20 then takes over. A second message 25 is sent over the LAN 3 causing the two conference engines to negotiate and establish the conference.

Thereafter, both operators are able to cooperatively manage the same network.

The described system has the advantage that it considerably enhances the ability of inexperienced network operators to operate the network with minimum disruption and also of experienced operators to consult each other to deal with difficult network problems.

## Claims

1. A network management system comprising a wide area network, a network manager controlling the operation of said network, and at least two network management stations attached to said network to allow operator intervention in the management thereof, **characterized in that** each said management station includes a conference engine, and means are provided for directly linking said at least two network management stations to permit real time interaction between said network operators via said conference engines as they manage the network.

2. A network management system as claimed in claim 1, **characterized in that** said network management stations are linked via a local area network.

3. A network management system as claimed in claim 1, **characterized in that** said network management stations are connected to respective local area networks interconnected through the wide area network.

4. A network management system as claimed in claim 1, **characterized in that** each said network management station includes a conference engine, and said network managers communicate with said conference engines using a messaging system.

5. A network management system as claimed in claim 4, **characterized in that** said network managers communicate with said conference engines using IP protocol.

6. A network management system as claimed in claim 1, **characterized in that** said workstations include display screens with a plurality of windows, at least one of which duplicates a network status screen on a remote network management station when in a conference mode.

7. A network management system as claimed in claim 6, **characterized in that** in the conference mode one of said windows includes a whiteboard area which permits an operator to make a drawing or annotation which is reproduced on a similar whiteboard area of a remote network management station.

8. A network management system as claimed in claim 6, **characterized in that** one of said windows is a video window showing an image of a scene at the remote network management station.

## Patentansprüche

1. Netzwerkverwaltungssystem, bestehend aus einem Fernnetz, ein Netzwerkverwaltungsprogramm, das den Betrieb des Netzwerks kontrolliert, und mindestens zwei Netzwerkverwaltungsstationen, die an das Netzwerk angeschlossen sind, um das Eingreifen des Bedieners in seine Verwaltung zu ermöglichen, **dadurch gekennzeichnet, dass** jede Verwaltungsstation eine Konferenzmaschine und Mittel umfasst, die vorgesehen sind, um die mindestens zwei Netzwerkverwaltungsstationen direkt zu verbinden, um über die Konferenzmaschinen zwischen den Netzwerkbedienern eine Wechselwirkung in Echtzeit bei der Verwaltung des Netzwerkes zu ermöglichen.

2. Netzwerkverwaltungssystem nach Anspruch 1, **dadurch gekennzeichnet, dass** die Netzwerkverwaltungsstationen über ein lokales Netzwerk verbunden sind.

3. Netzwerkverwaltungssystem nach Anspruch 1, **dadurch gekennzeichnet, dass** die Netzwerkverwaltungsstationen an entsprechende lokale Netzwerke angeschlossen sind, die über das Fernnetz miteinander verbunden sind.

4. Netzwerkverwaltungssystem nach Anspruch 1, **dadurch gekennzeichnet, dass** jede Netzwerkverwaltungsstation eine Konferenzmaschine umfasst, und die Netzwerkverwaltungsprogramme mit den Konferenzmaschinen anhand eines Nachrichtenabfertigungssystems Informationen austauschen.

5. Netzwerkverwaltungssystem nach Anspruch 4, **dadurch gekennzeichnet, dass** die Netzwerkverwaltungsprogramme mit den Konferenzmaschinen unter Verwendung eines IP-Protokolls Informationen austauschen.

6. Netzwerkverwaltungssystem nach Anspruch 1, **dadurch gekennzeichnet, dass** die Arbeitsstationen Bildschirmanzeigen mit einer Vielzahl von Fenstern umfassen, von denen in einem Konferenzmodus mindestens eines einen Netzwerkstatusbildschirm auf einer Fernnetzverwaltungsstation dupliziert.

7. Netzwerkverwaltungssystem nach Anspruch 6, **dadurch gekennzeichnet, dass** in dem Konferenzmodus eines der Fenster einen Bereich mit einer elektronischen Tafel umfasst, die es einem Bediener ermöglicht, eine Zeichnung oder Anmerkung anzufertigen, die in einem ähnlichen Tafelbereich einer entfernten Netzwerkverwaltungsstation wiedergegeben wird.

8. Netzwerkverwaltungssystem nach Anspruch 6, **dadurch gekennzeichnet, dass** eines der Fenster ein Videofenster ist, das ein Bild einer Szene auf der entfernten Netzwerkverwaltungsstation zeigt.

## Revendications

1. Système de gestion de réseau comprenant un réseau étendu, un gestionnaire de réseau contrôlant le fonctionnement dudit réseau, et au moins deux postes de gestion de réseau connectés audit réseau pour permettre l'intervention d'opérateurs dans sa gestion, **caractérisé en ce que** chaque dit poste de gestion comprend un moteur de conférence, et des moyens sont proposés pour lier directement lesdits au moins deux postes de gestion de réseau pour permettre une interaction en temps réel entre lesdits opérateurs de réseau par l'intermédiaire desdits moteurs de conférence lorsqu'ils gèrent le réseau.

2. Système de gestion de réseau selon la revendication 1, **caractérisé en ce que** lesdits postes de gestion de réseau sont liés par l'intermédiaire d'un réseau local.

3. Système de gestion de réseau selon la revendication 1, **caractérisé en ce que** lesdits postes de gestion de réseau sont connectés aux réseaux locaux respectifs interconnectés par l'intermédiaire du réseau étendu.

4. Système de gestion de réseau selon la revendication 1, **caractérisé en ce que** chacun desdits postes de gestion de réseau comprend un moteur de conférence, et que lesdits gestionnaires de réseau communiquent avec lesdits moteurs de conférence à l'aide d'un système d'envoi de messages.

5. Système de gestion de réseau selon la revendication 4, **caractérisé en ce que** chacun desdits gestionnaires de réseau communique avec lesdits moteurs de conférence à l'aide du protocole IP.

6. Système de gestion de réseau selon la revendication 1, **caractérisé en ce que** lesdites stations de travail comprennent des écrans d'affichage avec une pluralité de fenêtres, au moins une desquelles duplique un écran d'état du réseau sur un poste de gestion de réseau à distance quand elle est en mode de conférence.

7. Système de gestion de réseau selon la revendication 6, **caractérisé en ce que**, dans le mode de conférence, une desdites fenêtres comprend une zone de tableau blanc qui permet à un opérateur de tracer un dessin ou d'écrire une note qui est reproduit(e) sur une zone de tableau blanc similaire d'un poste de gestion de réseau à distance.

8. Système de gestion de réseau selon la revendication 6, **caractérisé en ce qu'**une desdites fenêtres est une fenêtre vidéo montrant une image d'une scène au poste de gestion de réseau à distance.
